# EUROPEAN PATENT SPECIFICATION

(11) **EP 0 363 742 B1**
(45) Date of publication and mention of the grant of the patent: **09.06.1993**
(21) Application number: 89117962.4
(22) Date of filing: 28.09.1989
(51) Int. Cl.: C01B 33/029, C01B 33/037

(54) **Polysilicon with diminished hydrogen content**
Polysilicium mit vermindertem Wasserstoffgehalt
Polysilicium à teneur en hydrogène reduite

(30) Priority: 11.10.1988 US 255967
(43) Date of publication of application: 18.04.1990
(73) Proprietor: ETHYL CORPORATION, Baton Rouge Louisiana 70801 (US)
(72) Inventor: Allen, Robert Hall, Baton Rouge Louisiana 70808 (US); Boone, James Edward, Baton Rouge Louisiana 70810 (US)
(74) Representative: Schwabe - Sandmair - Marx

(56) References cited:
- EP-A- 0 258 027

## Description

Polysilicon of the type disclosed in U. S. Patents 4,784,840 and 4,820,587 (both issued to Gautreaux and Allen) (the latter patent corresponding to EP-A-0 258 027) is composed of free flowing, approximately spherical particles. These particles are prepared in a fluidized bed by contacting silicon particles with a silane-containing compound ("silane, dichlorosilane, trichlorosilane or a similar silane containing compound") under thermal decomposition temperatures and thereby depositing silicon on said silicon particles. The product particles can be transported and handled readily. Hence, such bead-like products offer crystal growers a product that is tailor-made for development of continuous melt replenishment systems used in production of monocrystalline silicon. Monocrystalline silicon is used in the production of semiconductor devices.

This invention relates to an upgrading improvement in the polysilicon disclosed in the above-mentioned documents. In a continuing effort to improve such polysilicon, it has been discovered that such product can be improved by a heat treatment which reduces the content of a volatile impurity, which is believed to be hydrogen.

Applicants are unaware of any prior art relating to hydrogen removal from polysilicon. Sanjurjo et al, U. S. 4,787,968 discloses a process for melt consolidating polysilicon powder. For melt consolidation, the powder is heated at a temperature above the melting point of silicon (1410°C.). The processes of this invention do not employ temperatures above silicon's melting point. Furthermore, an object of this invention is to produce heat treated polysilicon while avoiding melt consolidation. Accordingly, the processes of this invention markedly differ from the process of the Sanjuro et al patent.

In a particular aspect, this invention relates to semiconductor grade polysilicon prepared in a fluidized bed by the thermal decomposition of a silane-containing compound on silicon particles and having a hydrogen content less than 30 ppma reduced by a heat treatment. The heat treatment to reduce the amount of hydrogen impurity may be conducted using various techniques, for example, it may be conducted using a moving bed or a fluidized bed.

In accordance with the invention, the hydrogen content of the upgraded product provided by this invention is less than 30 ppma. Typically, the improved products of this invention are in bead-like form. In other words, the products of this invention are in the form of approximately spherical particles. Preferably, these particles have a size range of from 150 to 1500 µm, and have an average size of from 600 to 800 µm. Such products are free-flowing and readily transported and handled. Thus, they are also eminently suited for continuous and semi-continuous processes for producing semiconductor grade monocrystalline silicon, and especially suited for such processes wherein hydrogen impurity is a problem.

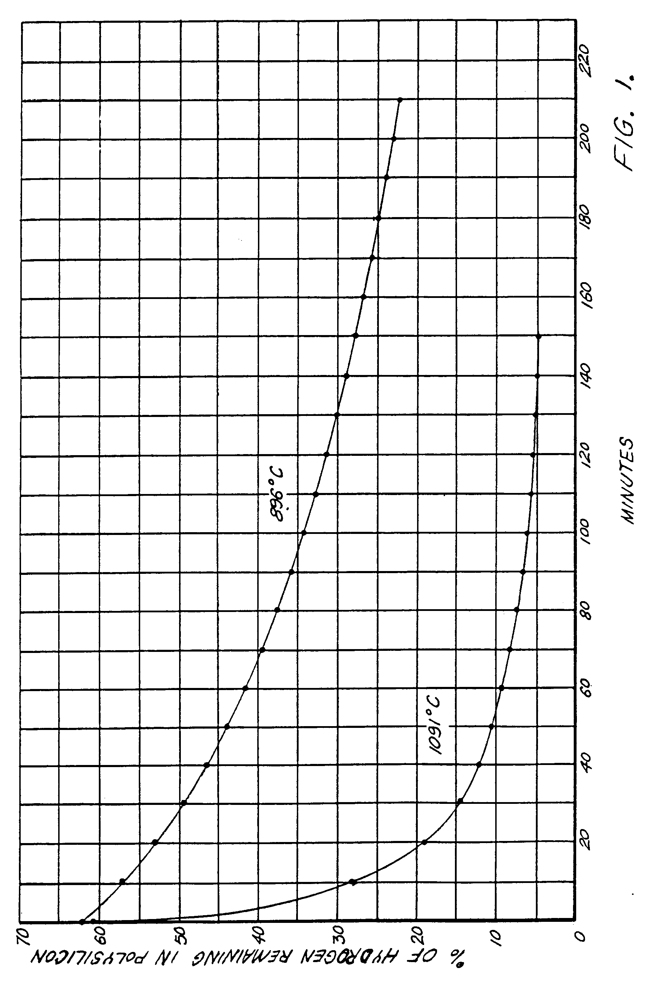

Figure 1 illustrates the reduction in hydrogen content obtained by heating samples of polysilicon beads. As shown, one sample was heated at 896°C.; the other was heated at 1091°C. Each of the polysilicon samples weighed about 90 g.

The samples were heated in a vertical quartz tube about 2,54 cm (1 inch) in diameter and several inches long. Prior to heating the samples, the tube was heated at 225°C. overnight to remove moisture and/or other materials which could interfere with the analysis. The weight of the polysilicon samples charged to the tube were within the range of 85-100 g. The size of the tube allowed good contact between the bead surfaces and the gas phase. The tube was fitted with a thermowell, in which a thermocouple was inserted to permit accurate temperature measurement.

The tube and contents were heated to the temperature causing the polysilicon to outgas. The evolved gas was pumped to a reservoir. At intervals, (typically every ten minutes) the temperature and pressure of the reservoir, and of the sample tube were noted, allowing the calculation of the amount of gas released during the interval.

Some agglomeration of the beads was noted, particularly in the sample heated to 1091°C.

The initial concentration of hydrogen in the polysilicon was about 620 ppma. In the drawing, the percent hydrogen remaining at time zero is less than 100% because some hydrogen was removed during the period (approximately 30 minutes) required for the sample tube and contents to reach the test temperature. The circled points in the drawing represent data obtained from the following table. The curves show trends of the data at both temperatures.

**TABLE I**

| Polysilicon Dehydrogenation | | |
|---|---|---|
| Time (minutes) | Fraction of Hydrogen Remaining | |
| | 396°C. | 1091°C. |
| 0 | 0.6178 | 0.6076 |
| 10 | 0.5717 | 0.2816 |
| 20 | 0.5306 | 0.1920 |
| 30 | 0.4963 | 0.1505 |
| 40 | 0.4656 | 0.1238 |
| 50 | 0.4389 | 0.1063 |
| 60 | 0.4158 | 0.0923 |
| 70 | 0.3927* | 0.0823 |
| 80 | 0.3757 | 0.0742 |
| 90 | 0.3581 | 0.0742 |
| 100 | 0.3424 | 0.0689 |
| 110 | 0.3280 | 0.0629 |
| 120 | 0.3141 | 0.0589 |
| 130 | 0.3015 | 0.0551 |
| 140 | 0.2896 | 0.515 |
| 150 | 0.2786 | 0.0494 |
| 160 | 0.2687 | 0.0471 |
| 170 | 0.2587 | |
| 180 | 0.2500 | |
| 190 | 0.2410 | |
| 200 | 0.2327 | |
| 210 | 0.2244 | |

| | | |
|---|---|---|
| * 71 minutes | | |

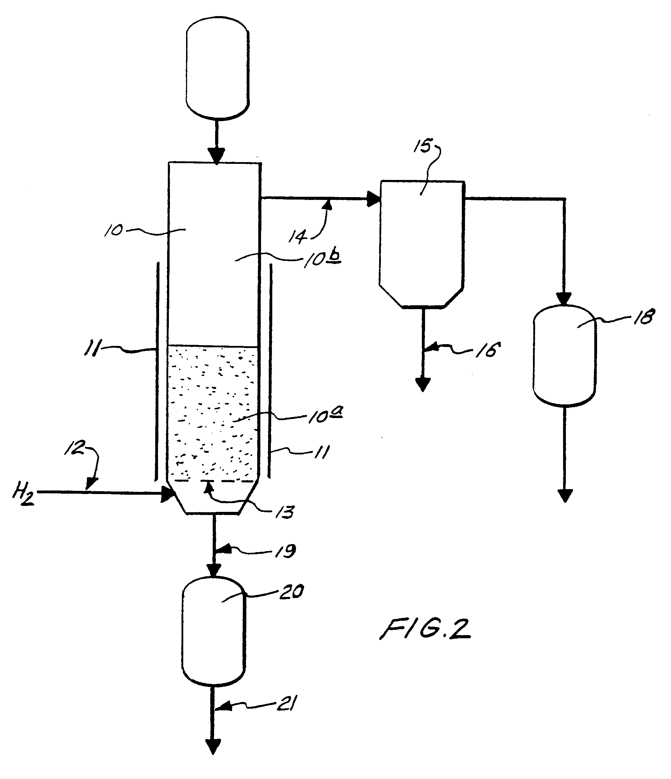

Figure 2 is a representation, partially in cross-section and not to scale, of a fluidized bed apparatus for use in this invention.

This invention relates to polysilicon having a volatile impurity removed. From chromatographic evidence, it is believed that the removed impurity is hydrogen. However, the heat treatment used in the process of this invention may also remove other volatile impurities which are present in the polysilicon product to be upgraded.

This invention relates to a polysilicon product (upgraded by heat treatment) which was produced in a fluidized bed process. Thus, the invention relates to improved polysilicon beads or bead-like particles. In accordance with the invention, the polysilicon to be upgraded is a material which was produced in a fluidized bed by the thermal decomposition of a silane-containing compound on silicon particles, whereby the silane-containing compound is particularly silane.

Accordingly, in one embodiment, this invention relates to semiconductor grade polysilicon prepared in a fluidized bed by the thermal decomposition of a silane-containing compound and having a low hydrogen content. The low hydrogen content is achieved by heating the polysilicon for a time and at a temperature sufficient to remove hydrogen from the polysilicon. As an example, a polysilicon product produced in a fluidized bed by the thermal decomposition of silane may contain from 100 to 1000 ppma hydrogen. After the heat treatment conducted according to the process of this invention, the polysilicon can have a hydrogen content of less than about 30 ppma. The hydrogen removal step can be conducted as an operation separate from and subsequent to the formation of polysilicon in a fluidized bed.

Thus, this invention also relates to a process for heating silane-derived polysilicon (preferably in the form of beads or bead-like particles) for a time and at a temperature sufficient to reduce the hydrogen content of the polysilicon. Thus, in another preferred aspect, this invention comprises a process for heat treating silane-derived polysilicon in the form of beads, preferably having a size within the range of from 150 to 1500 µm, said process comprising heating said polysilicon in hydrogen at a temperature and for a time (a) sufficient to reduce the hydrogen content of said beads, and (b) insufficient to melt consolidate said polysilicon beads. The beads are preferably kept in motion during the dehydrogenation period in order to diminish the amount of particle agglomeration. In general, agglomeration at comparatively high dehydrogenation temperatures increases if the particles are static, i.e., not in motion during the heating period.

Agglomeration tends to take place when the dehydrogenation temperature is high enough to soften the polysilicon particles being treated. For this reason, temperatures above about 1200°C. are generally avoided although slight excursions above that temperature can be tolerated in some instances. Generally, the process temperature is kept considerably below the melting point of silicon, 1410°C.

Thus, in still another preferred embodiment this invention relates to a process for dehydrogenating silane-derived polysilicon beads having a size range of from 400 to 1000 µm, and an average size of from 600 to 800 µm, said process comprising heating said beads in a fluidized bed at a temperature of from 1000°C. to 1200°C., and at ambient pressure, for a time sufficient to reduce the hydrogen content of said beads, said beads being maintained during said heating in fluidized suspension by motive force supplied by a stream of gas selected from hydrogen and the gases of Group VIII of the Periodic Table.

As indicated above, a fluidized bed method need not be used. Moving bed methods can also be employed if desired.

For this invention, a preferred polysilicon for upgrading is a material of the type disclosed in the above-cited documents of Gautreaux and Allen. Polysilicon products produced by the method disclosed in those documents generally will contain some hydrogen. The hydrogen content appears to be a function of the operating conditions employed. Generally speaking, it appears that the hydrogen content is inversely proportional to the process temperature used. In other words, use of lower temperatures for decomposition of silane, results in higher content of hydrogen in the product particles.

Polysilicon produced by the fluidized bed method of Gautreaux and Allen is in the form of free-flowing, approximately spherical beads. In general, the size distribution of such starting materials has a range of from 150 to 1500 µm. A typical average size is 650 to 750 µm. The particle density is typically within the range of 2.25 to 2.33 g/cm³; a typical average is 2.30 to 2.31 g/cm³. Preferred materials have a bulk density of about 1360 kg/m³. Surface dust is typically less than 0.1 percent, e.g., 0.010-0.070 weight percent. A typical material of this type which can be used as a starting material for this invention is a silane-derived, semiconductor grade polysilicon having the following characteristical features:
(i) it is in bead-like, approximately spherical form,
(ii) has a surface morphology illustrated by Figures 3 and 3A of U. S. Patent 4,820,587,
(iii) has a size distribution of from 400 to 1000 µm,
(iv) has an average size of 650 to 750 µm,
(v) has a boron content within the range of 0.01 to 0.25 ppba,
(vi) has a phosphorus content within the range of 0.01 to 0.19 ppba, and
(vii) has a carbon content within the range of 0.16-0.33 ppm,
said particles being in admixture with less than about 0.08 percent of surface silicon dust particles having a size up to 10 µm. Such polysilicon is free flowing, readily handleable and transportable, and suitable for continuous melt replenishment systems for producing monocrystalline silicon.

As stated above, the process of this invention can be conducted using a polysilicon containing from 100 to 1000 ppma hydrogen. It is to be understood, however, that this invention can be applied to polysilicon containing a greater or lesser amount of hydrogen impurity. There is no real upper limit on the amount of hydrogen in the polysilicon to be upgraded. With regard to a lower limit, one does not use as a starting material a polysilicon having a hydrogen content which cannot be reduced by treatment at the operating temperature and time selected. For example, as shown in the drawing of Figure 1, the rate of reduction in hydrogen content is not large after a certain operating time. Furthermore, at any given temperature there appears to be a polysilicon hydrogen content which cannot be reduced further for an economically feasible reaction period. Thus, the hydrogen content is a process criterion to be considered.

In this invention, the polysilicon to be upgraded is heated at a temperature and for a time sufficient to reduce the hydrogen content of the particles being treated, and insufficient to melt consolidate, i.e., agglomerate, the particles by sintering. It has been discovered that process temperatures of from 1000°C. to 1200°C. result in satisfactory diffusion rates and practical reactor sizes. Higher temperatures greatly increase the sintering rate as the melting point of silicon is neared. Lower temperatures require impractical, i.e. uneconomic, reaction times.

Generally speaking, reaction times of less than about 10 hours are preferred. More preferably, reaction time is within the range of from 1 to 6 hours, with most preferable times being in the range of from 2 to 4 hours. The reaction time is not a truly independent variable, but is dependent to an appreciable extent on the reaction temperature employed. In general, the higher the reaction temperature the shorter the dehydrogenation time required.

The dehydrogenation of this invention proceeds well at ambient pressure; however, higher and lower pressures can be used if desired. In general, pressures higher than ambient retard the removal of volatile substance from the polysilicon particles being treated, and subatmospheric pressures facilitate the process. When selecting a subatmospheric pressure, cost considerations should be borne in mind. There is no real lower limit on the pressure employed, and an operator can select any subatmospheric pressure desired, e.g. down to 1,33 mbar (one torr) or lower.

To facilitate contact of the polysilicon particles with the vapor phase in order to promote diffusion of hydrogen from the particles, and also to reduce the tendency of particles to agglomerate at the process temperature employed, the particle bed is preferably maintained in motion during the dehydrogenation process. Thus, as stated above, one may use a moving bed or a fluidized bed apparatus. A preferred process utilizes a fluidized bed. Fluidized beds result in higher heat transfer rates between solid and fluid compared to other conventional modes of contact (an important factor in high temperature operation). Furthermore, the smooth flow of fluidized particles promotes ease of handling.

Referring to the drawing, a fluidized bed reactor 10 can be employed in our dehydrogenation process. In the reactor is fluidized bed 10a, comprising polysilicon particles being upgraded by dehydrogenation. The reactor has free space 10b above the fluidized bed. The bed is heated to process temperature by radiant heater 11 which surrounds reactor 10. The bed of particles is maintained in a fluidized state by a stream of hydrogen gas which enters reactor 10 through line 12. After entering the reactor near the base thereof, the stream of motive gas flows through distributor 13 into the particle bed. Distributor 13 has multiple orifices in order to distribute the flow of motive gas throughout the bed, and maintain it in fluidized suspension. Prior to entering the reactor, the motive gas can be heated by any suitable heating device (not shown). For example, the motive gas can be heated to a temperature of 325°C. or above.

The motive gas exits the reactor through line 14 near the top thereof, and then flows into solids filter 15. Polysilicon dust which is entrained in the gas exit stream is removed by the solids filter. By-product solids are removed from the filter through line 16. Effluent gas with solids removed is discharged through line 17. If desired, the effluent gas can be recycled (after purification in purification zone 18, if necessary).

After dehydrogenation, the upgraded product is removed via line 19 to product cooler/collector 20. As required, dehydrogenated product can be removed from the cooler/collector via line 21.

A preferred mode of operation of the fluidized bed is semi-batch in which 10 to 20 weight percent of the total bed mass is withdrawn and a similar quantity of untreated material is charged every cycle (typically 1 to 3 hours). After the withdrawn product is cooled to a suitable handling temperature, approximately 50-60°C., the hydrogen atmosphere surrounding the withdrawn pellets is replaced with an inert gas such as argon, and the polysilicon product appropriately packaged to prevent or substantially prevent contamination. The packaging is conducted under an argon atmosphere.

It is not necessary to use hydrogen as the motive gas; other gases can be employed if desired. When hydrogen is used as the motive gas, conflicting hydrogen diffusion mechanisms occur. On the one hand, hydrogen diffuses out of the particles being treated. At the same time, hydrogen in the gaseous phase near the polysilicon beads tends to diffuse into the particles. The net result of these two opposing mechanisms determines the overall effectiveness of the dehydrogenation treatment. The opposing mechanisms are discussed below.

At any given process temperature employed, hydrogen within the polysilicon particles has a certain tendency to diffuse out of the particles and into the surrounding gas phase. The hydrogen diffusion rate is dependent, at least to some extent, upon (a) the concentration of hydrogen in the particles and (b) the microscopic structure of the polysilicon particles. Some hydrogen diffuses out of the particles by traveling between the silicon atoms in the crystalline matrix. Other hydrogen tends to leave the particles via voids or interfaces between crystalline surfaces in the particles.

On the other hand, hydrogen within the gaseous fluid surrounding the particles has a tendency to diffuse into the particles. This tendency depends at least to some extent on the hydrogen concentration in the gas phase. As the concentration of hydrogen increases, the rate of hydrogen diffusion into the particles also increases.

The net result of diffusion in and out of the particles during heat treatment determines the final hydrogen concentration. Thus, when hydrogen is used as the motive gas, the particles produced by the process of this invention will still have some small amount of hydrogen remaining. All conditions being equal, this final hydrogen concentration will be greater than when some other motive gas not containing hydrogen, e.g. argon, is employed in the process.

As appreciated by a skilled practitioner, when a fluidized bed apparatus is used to conduct the process of this invention, a flow of gas imparts motion to the particles being treated. When a moving bed is employed, particle motion is imparted by some other motive force, e.g., gravity.

To prepare polysilicon suitable for use in preparation of semiconductor devices, the process of this invention should be conducted under conditions which eliminate or substantially eliminate contamination of the polysilicon product. Thus, for example, the vessel in which the polysilicon is heat treated should be one in which the particles are exposed only to high purity silicon and high purity fluids. Thus, it is preferred that the parts of the vessel to which the particles are exposed, be fabricated from or coated with high purity silicon.

The polysilicon which is used as a starting material for the process of this invention, and which is made according to the process described in the above-mentioned patents of Gautreaux and Allen typically has a surface dust content of about 0.1 weight percent or less. The process of this invention may reduce the surface dust content. In general, the reduction in surface dust is greater when higher operating temperatures are used, and when the process of this invention is conducted while using a stream of motive gas to fluidize the polysilicon particles being treated.

With regard to the flow of motive gas, there is a threshold or minimum gas velocity required to keep the particle bed in a fluidized state. Operational velocities for this invention are generally somewhat above this minimum, Uₘᵢₙ. In many instances the operation velocity, U, is 1 to 10 times Uₘᵢₙ; preferably U/Uₘᵢₙ is 1.05 to 3.5.

### Example 1

Polysilicon of the type described in the above-cited patents of M. F. Gautreaux and Robert H. Allen was heated at a temperature of 776.2° ± 14.6°C. The initial hydrogen concentration in the polysilicon was 619 ppma. The hydrogen concentration at various times is noted in the following table.

**Table II**

| Hours | H₂ Content (ppma) |
|---|---|
| 1 | 579 |
| 2 | 501 |
| 3 | 458 |
| 4 | 424 |
| 5 | 403 |
| 6 | 374 |

The hydrogen content reducing process of this example can be conducted using semiconductor grade, silane-derived, fluidized bed-produced polysilicon composed of approximately spherical particles having a size range of 150 to 1500 µm, an average size of 600 to 800 µm, and a hydrogen content of 100 to 1000 ppma. The process can be conducted for from 1 to 6 hours using a temperature within the range of 1000° to 1200°C., and a process time of from 2 to 4 hours. The process is preferably conducted while maintaining the particles in motion in a moving bed apparatus or a fluidized bed apparatus. When a fluidized bed method is used, the levitating gas can be selected from hydrogen, argon, neon, xenon, and similar non-contaminating inert gases. The process produces a reduction in hydrogen content, for example below 30 ppma. Preferred polysilicon produced by the process of this invention contains from 5 to 25 ppma hydrogen.

### Example 2

9,07 kg (Twenty pounds) of silane-derived, fluidized bed produced, semiconductor grade polysilicon was charged to a fluidized bed reactor, and maintained in a fluidized bed state using a levitation hydrogen flow of about 5,18 Std-m³/h (182.8 SCFH). After the bed temperature reached 920°C., another 3,63 kg (eight pounds) of polysilicon was charged.

The bed was maintained in fluidized motion at 910°C. for eight hours. Thereafter, a sample was taken. Analysis indicated that the surface silicon dust content was 0.006 weight percent. The surface dust value of the silicon charged to the reactor was 0.071 weight percent.

The hydrogen content of the polysilicon charged was reduced from 884 ppma to 11 ppma.

As a further illustration of the process of this invention, a mass of polysilicon particles of 700 µm average diameter is fluidized with hydrogen using a hydrogen flow rate for fluidization of U/Uₘᵢₙ = 1.5. The bed temperature is kept at 1100°C. for an average particle residence time of 12.67 hours.

The reactor surfaces exposed to the polysilicon being treated are composed of a non-contaminating substance such as high purity silicon.

The above process will reduce the hydrogen content of polysilicon from 1000-1200 ppma to about 50 ppma. If the polysilicon charged has an initial hydrogen concentration of about 600 ppma, the concentration will be reduced to a value within the range of 20-25 ppma.

After reduction of the hydrogen content of the particles in the process described above, the particles are cooled in a product cooler. Generally speaking, the particles are cooled to a temperature in the range of 60°-65°C. prior to removal of the product to a product hopper.

As can be seen, the dehydrogenation process of this invention can be an operation separate and distinct from the process in which the polysilicon beads are formed. Furthermore, as can be seen by the above description, dehydrogenation of polysilicon according to this invention can be conducted subsequent to the preparation of the polysilicon beads, which are to be dehydrogenated.

## Claims

1. Semiconductor grade polysilicon prepared in a fluidized bed by the thermal decomposition of a silane-containing compound on silicon particles and having a hydrogen content less than 30 ppma obtained by a heat treatment, at temperatures not above the melting point of silicon.

2. Heat-treated polysilicon according to claim 1 having spheroidal form, a size range of from 150 µm to 1500 µm, and an average size of from 600 µm to 800 µm,

3. Heat-treated polysilicon according to claim 1 in the form of beads having a size range of from 400 µm to 1000 µm, and an average size of from 600 µm to 800 µm, which has been subjected to heating to 1000 °C to 1200 °C for from 2 to 4 hours

4. Semiconductor grade polysilicon prepared in a fluidized bed by the thermal decomposition of a silane-containing compound on silicon particles and thereafter contacting the particles with a gas containing a thermally decomposable silicon-containing compound to deposit a thin layer of silicon on said particle surfaces, said polysilicon having
(i) a bead-like, approximately spherical form;
(ii) a size distribution of from 400 µm to 1000 µm;
(iii) an average size of 650 µm to 750 µm;
(iv) a boron content within the range of 0.01 to 0.25 ppba;
(v) a phosphorus content within the range of from 0.01 to 0.19 ppba;
(vi) a carbon content within the range of from 0.16 to 0.33 ppm;
(vii) a surface dust content less than about 0.08 % by weight; and
(viii) a hydrogen content less than 30 ppma.

5. A process for reducing the hydrogen content of semiconductor grade polysilicon particles prepared in a fluidized bed by the thermal decomposition of a silane-containing compound on silicon particles wherein the hydrogen content is reduced to a level below the hydrogen content of said particles prior to initiation of said process, said process comprising heating said particles for a time sufficient to reduce the hydrogen content of said particles.

6. A process for dehydrogenating polysilicon beads prepared in a fluidized bed by the thermal decomposition of a silane-containing compound on silicon particles and having a size range of from 400 µm to 1000 µm, and an average size of from 600 µm to 800 µm, said process comprising heating said beads in a fluidized bed at a temperature of from 1000 °C to 1200 °C at ambient pressure and for a time sufficient to reduce the hydrogen content of said beads, said beads being maintained in fluidized suspension during said heating by motive force supplied by a stream of gas selected from hydrogen and the gases of Group VIII of the Periodic Table.

7. The process of claim 6 wherein said beads prior to dehydrogenation were formed in a fluidized bed by chemical vapor deposition of silicon on polysilicon beads, said silicon being obtained by the thermal decomposition of silane conducted at a temperature of from 500 °C to 650 °C.

8. The process of claim 6 wherein said gas is hydrogen.

9. The process of claim 6 wherein said gas is argon.

10. A process for heat treating polysilicon in the form of beads having a size within the range of from 150 µm to 1500 µm, said polysilicon being prepared in a fluidized bed by the thermal decomposition of a silane-containing compound on silicon particles, said process comprising heating said polysilicon in hydrogen at a temperature and for a time (a) sufficient to reduce the hydrogen content of said polysilicon beads, and (b) insufficient to melt-consolidate said polysilicon beads.

## Patentansprüche

1. Polysilicium von Halbleiterqualität, hergestellt in einem fluidisierten Bett durch thermische Zersetzung einer silanhaltigen Verbindung auf Siliciumteilchen, das einen Wasserstoffgehalt von weniger als 30 ppma aufweist und durch Wärmebehandlung bei Temperaturen erhalten wird, die nicht über dem Schmelzpunkt von Silicium liegen.

2. Wärmebehandeltes Polysilicium nach Anspruch 1 mit Kugelform, im Größenbereich von 150 µm bis 1500 µm und einer Durchschnittsgröße von 600 µm bis 800 µm.

3. Wärmebehandeltes Polysilicium nach Anspruch 1 in Form von Perlen mit einem Größenbereich von 400 µm bis 1000 µm und einer Durchschnittsgröße von 600 µm bis 800 µm, das 2 bis 4 Stunden auf 1000°C bis 1200°C erhitzt wurde.

4. Polysilicium von Halbleiterqualität, hergestellt in einem fluidisierten Bett durch thermische Zersetzung einer silanhaltigen Verbindung auf Siliciumteilchen und anschließendes Inkontaktbringen der Teilchen mit einem Gas, das eine thermisch zersetzbare siliciumhaltige Verbindung enthält, um eine dünne Schicht Silicium auf die Oberflächen der Teilchen abzuscheiden, wobei das Polysilicium
( i) eine perlige, angenähert runde Form;
( ii) eine Größenverteilung von 400 µm bis 1000 µm;
( iii) eine Durchschnittsgröße von 650 µm bis 750 µm;
( iv) einen Borgehalt im Bereich von 0,01 bis 0,25 ppba;
( v) einen Phosphorgehalt im Bereich von 0,01 bis 0,19 ppba;
( vi) einen Kohlenstoffgehalt im Bereich von 0,16 bis 0,33 ppm;
( vii) einen Oberflächenstaubgehalt von weniger als etwa 0,08 Gew.-% und
(viii) einen Wasserstoffgehalt von weniger als 30 ppma
aufweist.

5. Verfahren zur Verringerung des Wasserstoffgehalts von in einem fluidisierten Bett durch thermische Zersetzung einer silanhaltigen Verbindung auf Siliciumteilchen hergestellten Polysiliciumteilchen von Halbleiterqualität, bei dem der Wasserstoffgehalt auf ein Niveau unter dem Wasserstoffgehalt der Teilchen vor Beginn des Verfahrens verringert wird und bei dem die Teilchen solange erwärmt werden, bis ihr Wasserstoffgehalt verringert ist.

6. Verfahren zur Dehydrierung von Polysiliciumperlen, die in einem fluidisierten Bett durch thermische Zersetzung einer silanhaltigen Verbindung auf Siliciumteilchen hergestellt wurden und einen Größenbereich von 400 µm bis 1000 µm und eine Durchschnittsgröße von 600 µm bis 800 µm aufweisen, bei dem die Perlen in einem fluidisierten Bett bei einer Temperatur von 1000°C bis 1200°C bei Umgebungsdruck für einen Zeitraum erhitzt werden, der ausreicht, um ihren Wasserstoffgehalt zu verringern, wobei die Perlen während des Erhitzens durch die Treibkraft eines aus Wasserstoff und den Gasen der Gruppe VIII des Periodensystems ausgewählten Gasstroms in fluidisierter Suspension gehalten werden.

7. Verfahren nach Anspruch 6, bei dem die Perlen vor der Dehydrierung durch chemische Dampfabscheidung von Silicium auf Polysilciumperlen gebildet und das Silicium durch die bei einer Temperatur von 500°C bis 650°C durchgeführte thermische Zersetzung von Silan erhalten wurde.

8. Verfahren nach Anspruch 6, bei dem das Gas Wasserstoff ist.

9. Verfahren n ach Anspruch 6, bei dem das Gas Argon ist.

10. Verfahren zur Wärmebehandlung von in einem fluidisierten Bett durch thermische Zersetzung einer silanhaltigen Verbindung auf Siliciumteilchen hergestelltem Polysilicium in Form von Perlen mit einer Größe im Bereich von 150 µm bis 1500 µm, bei dem das Polysilicium in Wasserstoff bei einer Temperatur und für einen Zeitraum erhitzt wird, die (a) ausreichen, um den Wasserstoffgehalt der Polysiliciumperlen zu verringern und (b) nicht ausreichen, um die Polysiliciumperlen durch Schmelzen zu verdichten.

## Revendications

1. Polysilicium de qualité pour semiconducteurs, préparé dans un lit fluidisé par décomposition thermique d'un composé contenant un silane sur des particules de silicium et ayant une teneur en hydrogène inférieure à 30 ppma, obtenu par traitement thermique à des températures non supérieures au point de fusion du silicium.

2. Polysilicium ayant subi un traitement thermique suivant la revendication 1, ayant une forme sphéroïdale, une plage de diamètres de 150 µm à 1500 µm et un diamètre moyen de 600 µm à 800 µm.

3. Polysilicium ayant subi un traitement thermique suivant la revendication 1, sous forme de perles ayant une plage de diamètres de 400 µm à 1000 µm et un diamètre moyen de 600 µm à 800 µm, qui a été soumis à un chauffage à une température de 1000°C à 1200°C pendant un temps de 2 à 4 heures.

4. Polysilicium de qualité pour semiconducteurs préparé dans un lit fluidisé par décomposition thermique d'un composé contenant un silane sur des particules de silicium, puis par mise en contact des particules avec un gaz contenant un composé contenant du silicium, pouvant être décomposé par la chaleur, pour déposer une couche mince de silicium sur la surface desdites particules, ledit polysilicium ayant
(i) une forme approximativement sphérique, analogue à celle de perles ;
(ii) une distribution des diamètres de 400 µm à 1000 µm ;
(iii) un diamètre moyen de 650 µm à 750 µm ;
(iv) une teneur en bore comprise dans l'intervalle de 0,01 à 0,25 ppba ;
(v) une teneur en phosphore comprise dans l'intervalle de 0,01 à 0,18 ppba ;
(vi) une teneur en carbone comprise dans l'intervalle de 0,16 à 0,33 ppm ;
(vii) une teneur en poussière de surface inférieure à environ 0,08 % en poids ; et
(viii) une teneur en hydrogène inférieure à environ 30 ppma.

5. Procédé de réduction de la teneur en hydrogène de particules de polysilicium de qualité pour semiconducteurs préparées dans un lit fluidisé par décomposition thermique d'un composé contenant un silane sur des particules de silicium, dans lequel la teneur en hydrogène est réduite à une valeur inférieure à la teneur en hydrogène desdites particules avant le début de mise en oeuvre dudit procédé, ledit procédé comprenant le chauffage desdites particules pendant un temps suffisant pour réduire la teneur en hydrogène desdites particules.

6. Procédé de déshydrogénation de perles de polysilicium préparées dans un lit fluidisé par décomposition thermique d'un composé contenant un silane sur des particules de silicium et ayant une plage de diamètres de 400 µm à 1000 µm et un diamètre moyen de 600 µm à 800 µm, ledit procédé comprenant le chauffage desdites perles dans un lit fluidisé à une température de 1000°C à 1200°C sous pression ambiante et pendant un temps suffisant pour réduire la teneur en hydrogène desdites perles, lesdites perles étant maintenues en suspension fluidisée au cours dudit chauffage par la force d'entraînement fournie par un courant de gaz choisi entre l'hydrogène et les gaz du Groupe VIII du Tableau Périodique.

7. Procédé suivant la revendication 6, dans lequel les perles, avant déshydrogénation, ont été formées dans un lit fluidisé par déposition chimique en phase vapeur de silicium sur des perles de polysilicium, ledit silicium étant obtenu par la décomposition thermique d'un silane effectuée à une température de 500°C à 650°C.

8. Procédé suivant la revendication 6, dans lequel le gaz est l'hydrogène.

9. Procédé suivant la revendication 6, dans lequel le gaz est l'argon.

10. Procédé de traitement thermique de polysilicium sous forme de perles ayant un diamètre compris dans l'intervalle de 150 µm à 1500 µm, ledit polysilicium étant préparé dans un lit fluidisé par la décomposition thermique d'un composé contenant un silane sur des particules de silicium, ledit procédé comprenant le chauffage dudit polysilicium dans de l'hydrogène à une température et pendant un temps (a) suffisants pour réduire la teneur en hydrogène desdites perles de polysilicium, et (b) insuffisants pour consolider par fusion lesdites perles de polysilicium.
